# EUROPÄISCHE PATENTSCHRIFT

(11) **EP 3 715 031 B1**
(45) Veröffentlichungstag und Bekanntmachung des Hinweises auf die Patenterteilung: **29.12.2021**
(21) Anmeldenummer: 19212681.1
(22) Anmeldetag: 05.10.2016
(51) Int. Cl.: B23D 47/02, B25H 3/02

(54) **TRANSPORTABLE BEARBEITUNGSEINHEIT, AUFBAU UND STAPELANORDNUNG**
TRANSPORTABLE PROCESSING UNIT, SETUP AND STACKED MODULES
UNITÉ DE TRAITEMENT TRANSPORTABLE, CONSTITUTION ET ENSEMBLE EMPILÉ

(43) Veröffentlichungstag der Anmeldung: 30.09.2020
(62) Teilanmeldung aus: 16777986.7
(73) Patentinhaber: Festool GmbH, 73240 Wendlingen am Neckar (DE)
(72) Erfinder: Ender, Dominic Richard, 72622 Nürtingen (DE)
(74) Vertreter: Patentanwälte Magenbauer & Kollegen Partnerschaft mbB

(56) Entgegenhaltungen:
- EP-A2- 2 277 651
- DE-A1-102008 034 273
- DE-U1-202014 010 031

## Beschreibung

Die Erfindung betrifft eine transportable Bearbeitungseinheit, insbesondere eine Tischkreissäge, zur Bearbeitung eines Werkstücks mit einem Werkzeug, umfassend eine auf einer Unterlage abstellbare kastenförmige Stützstruktur, die über eine zum Auflegen des zu bearbeitenden Werkstücks nutzbare Werkstück-Auflageplatte verfügt, sowie eine Antriebseinrichtung zum maschinellen Antrieb des Werkzeugs, die zumindest teilweise in der Stützstruktur angeordnet und daran betriebsbereit befestigt ist, so dass die Antriebseinrichtung bei der Bearbeitung des Werkstücks durch das von der Antriebseinrichtung angetriebene Werkzeug zumindest teilweise in der Stützstruktur verbleibt. Die DE 20 2004 009 123 U1 beschreibt eine Tischkreissäge mit einem Gehäuse, das umfangseitig und unterseitig mit im wesentlichen geschlossenen Außenflächen versehen ist. Das Gehäuse trägt eine Arbeitsplatte mit einer Auflagefläche. Ein Maschinenrahmen zur Aufnahme eines Motors und eines Sägeblatts ist unterhalb der Arbeitsplatte angeordnet. Die Standfläche der Tischkreissäge wird durch die untere Außenfläche des Gehäuses definiert. Dokument EP2277651 A2 zeigt eine transportable Bearbeitungseinheit nach dem Oberbegriff von Anspruch 1.

Eine Aufgabe der Erfindung besteht darin, die Betriebssicherheit einer transportablen Bearbeitungseinheit der eingangs genannten Art zu verbessern.

Diese Aufgabe wird durch die im Kennzeichen des Anspruchs 1 angegebenen Merkmale gelöst. Erfindungsgemäß verfügt die Stützstruktur über Stützausleger, die in einem Zustand, in dem die Stützstruktur auf der Unterlage abgestellt ist, eine Standfläche der Stützstruktur definieren, und die wahlweise in einer Transportstellung oder in einer Arbeitsstellung positionierbar sind, wobei die Standfläche der Stützstruktur in der Arbeitsstellung in wenigstens einer horizontalen Richtung größer ist als in der Transportstellung.

Erfindungsgemäß sind demnach mehrere Stützausleger vorgesehen, die jeweils in zwei verschiedene Stellungen - der Transportstellung und der Arbeitsstellung - versetzt werden können. In der Arbeitsstellung der Stützausleger ist die Standfläche der Stützstruktur in wenigstens einer horizontalen Richtung gegenüber der Transportstellung der Stützausleger vergrößert. Als horizontale Richtung soll in diesem Zusammenhang insbesondere eine Richtung bezeichnet werden, die in der Ebene der Unterlage liegt. Durch die Vergrößerung der Standfläche in wenigstens einer horizontalen Richtung kann die Kippstabilität der transportablen Bearbeitungseinheit im Betrieb erhöht werden. Dadurch wird die Betriebssicherheit verbessert. Gleichzeitig wird durch die Möglichkeit, die Stützausleger in die Transportstellung zu versetzen und damit die Standfläche zu verkleinern, der Vorteil der guten Transportierbarkeit und Handhabbarkeit einer Bearbeitungseinheit mit kastenförmiger Stützstruktur beibehalten.

Als Standfläche soll in diesem Zusammenhang insbesondere eine Fläche, beispielsweise eine rechteckige Fläche bezeichnet werden, die durch Berührungspunkte zwischen der Stützstruktur und der Unterlage aufgespannt wird. Vorzugsweise handelt es sich dabei um die maximale rechteckige Fläche, die durch die Berührungspunkte aufgespannt wird.

Zweckmäßigerweise umfasst die transportable Bearbeitungseinheit wenigstens zwei, vorzugsweise vier Stützausleger.

### Vorteilhafte Weiterbildungen der Erfindung sind Gegenstand der Unteransprüche

Vorzugsweise verfügt die Stützstruktur über einen Grundkörper und die Stützausleger sind derart verschwenkbar und/oder verschiebbar an dem Grundkörper gelagert, dass die Stützausleger in der Transportstellung und in der Arbeitsstellung im Wesentlichen in dem gleichen vertikalen Bereich verbleiben.

Dadurch, dass sich die vertikale Lage der Stützausleger beim Positionieren in die Transportstellung und die Arbeitsstellung nicht bzw. nicht wesentlich ändert, muss die transportable Bearbeitungseinheit beim Positionieren der Stützausleger nicht bzw. kaum von ihrer Unterlage angehoben werden. Die Stützausleger lassen sich folglich besonders einfach zwischen der Transportstellung und der Arbeitsstellung umpositionieren.

Zweckmäßigerweise verfügt die Stützstruktur über einen Grundkörper und jeder der Stützausleger ist um eine jeweilige vertikale Drehachse verschwenkbar an dem Grundkörper gelagert. Vorzugsweise sind die Stützausleger derart gelagert, dass sie um 90 Grad verschwenkt werden können, um von der Transportstellung in die Arbeitsstellung versetzt zu werden. Die Stützausleger sind vorzugsweise unterseitig - also an der unteren Außenfläche des Grundkörpers - vorgesehen. Zweckmäßigerweise verfügt der Grundkörper über Aussparungen, in denen die Stützausleger insbesondere in der Transportstellung angeordnet sind.

In bevorzugter Ausgestaltung weist ein horizontaler Querschnitt der Stützstruktur eine im Wesentlichen rechteckige Außenkontur auf, wobei sich die Stützausleger in der Transportstellung innerhalb der rechteckigen Außenkontur befinden und die Stützausleger in der Arbeitsstellung zumindest teilweise horizontal über die Außenkontur hinausragen. Vorzugsweise bilden die Stützausleger in der Transportstellung zusammen mit dem Grundkörper eine im wesentlichen quaderförmige Baugruppe.

Dadurch, dass sich die Stützausleger in der Transportstellung innerhalb der rechteckigen Außenkontur befinden, wird gewährleistet, dass die transportable Bearbeitungseinheit besonders gut transportiert und verstaut werden kann. Vorzugsweise sind die Stützausleger in unterseitigen Eckbereichen der Stützstruktur angeordnet. Insbesondere weist der Grundkörper in diesen Eckbereichen Aussparungen auf, die in Entsprechung zu den Stützauslegern geformt sind, und in denen die Stützausleger in der Transportstellung angeordnet sind.

Insbesondere erstrecken sich die Stützausleger jeweils in horizontaler Richtung weiter als in vertikaler Richtung, so dass die Stützausleger jeweils eine flache Grundgestalt aufweisen. Vorzugsweise weisen die Stützausleger jeweils eine im Wesentlichen L-förmige Grundfläche auf. Aufgrund der flachen und/oder L-förmigen Ausgestaltung wird der Vorteil erzielt, dass die Stützausleger wenig Bauraum benötigen.

Erfindungsgemäß umfasst die transportable Bearbeitungseinheit eine Sicherheitseinrichtung, die ausgebildet ist, zu verhindern, dass die Antriebseinrichtung mit Leistung versorgt wird, sofern sich wenigstens einer der Stützausleger nicht in der Arbeitsstellung befindet. Beispielsweise kann die Sicherheitseinrichtung ausgebildet sein, über Sensoren die Stellung einer oder mehrerer Stützausleger zu erfassen und eine Stromversorgung zur Antriebseinrichtung zu unterbrechen, wenn erfasst wird, dass sich wenigstens einer, vorzugsweise alle, der Stützausleger nicht in der Arbeitsstellung befindet. Auf diese Weise kann erzielt werden, dass die transportable Bearbeitungseinheit nur dann in Betrieb genommen werden kann, wenn davon ausgegangen werden kann, dass sich die Stützausleger in der Arbeitsstellung befinden, so dass die maximale Standfläche - und damit auch die maximale Kippstabilität - gegeben ist.

Insbesondere verfügt wenigstens einer der Stützausleger über ein vertikal verlaufendes Durchgangsloch, das zum Einsetzen einer Schraube geeignet ist, mit der die Stützstruktur auf der Unterlage fixiert werden kann. Zweckmäßigerweise verfügen zwei, vorzugsweise alle, der Stützausleger über ein solches Durchgangsloch.

Vorzugsweise verfügt wenigstens einer der Stützausleger über eine horizontal verlaufende Aufnahme, die zum Einsetzen eines Spannarms einer Zwinge geeignet ist, mit der die Stützstruktur auf der Unterlage fixiert werden kann. Zweckmäßigerweise verfügen wenigstens zwei, vorzugsweise alle, der Stützausleger über eine solche Aufnahme.

Zweckmäßigerweise verfügen die Stützausleger jeweils über einen vertikal nach unten ragenden, zylindrischen Fuß. Die zylindrischen Füße sind vorzugsweise derart voneinander beabstandet, dass sie in der Arbeitsstellung und/oder Transportstellung der Stützausleger in ein vorbestimmtes Lochraster einer Arbeitsplatte passen. Mittels der zylindrischen Füße kann die transportable Bearbeitungseinheit bei Positionierung auf einer Arbeitsplatte mit Lochraster relativ zu dieser fixiert werden.

In bevorzugter Ausgestaltung sind die zylindrischen Füße wahlweise in eine Fixierstellung oder Aufbewahrungsstellung positionierbar. Insbesondere ragen die zylindrischen Füße in der Aufbewahrungsstellung nicht oder weniger weit vertikal nach unten als in der Fixierstellung. Vorzugsweise verfügen die Stützausleger jeweils über einen Standfuß, der bei Aufbewahrungsstellung der zylindrischen Füße in einem Zustand, in dem die Stützstruktur auf der Unterlage abgestellt ist, in Kontakt mit der Unterlage steht. Vorzugsweise verfügen die Standfüße über eine größere Kontaktfläche als die zylindrischen Füße.

Beispielsweise sind die zylindrischen Füße als Bolzen ausgebildet. Vorzugsweise sind die zylindrischen Füße in der Fixierstellung herausnehmbar in unterseitig an den Stützauslegern vorgesehene Einsetz-Öffnungen eingesetzt. Zweckmäßigerweise sind die zylindrischen Füße in der Aufbewahrungsstellung in vorzugsweise oberseitig an den Stützauslegern vorgesehenen Aufbewahrungs-Öffnungen untergebracht.

Ferner wird ein Aufbau bereitgestellt, umfassend eine transportable Bearbeitungseinheit gemäß einer der voranstehenden Ausgestaltungen sowie eine mit einem Lochraster versehene Arbeitsplatte, wobei die transportable Bearbeitungseinheit derart auf der Arbeitsplatte positioniert ist, dass die zylindrischen Füße in jeweilige Löcher des Lochrasters greifen und dadurch die transportable Bearbeitungseinheit relativ zur Arbeitsplatte zumindest in horizontaler Richtung fixieren.

Ferner wird eine Stapelanordnung bereitgestellt, umfassend eine transportable Bearbeitungseinheit gemäß einer der voranstehenden Ausgestaltungen sowie mindestens einen kastenförmigen Körper, der unter der transportablen Bearbeitungseinheit angeordnet ist, um zusammen mit der transportablen Bearbeitungseinheit einen vertikalen Stapel zu bilden. An den Stützauslegern sind zweckmäßigerweise Eingriffsstrukturen vorgesehen, die derart ausgebildet sind, dass sie in Transportstellung der Stützausleger in Eingriff mit entsprechenden Eingriffsstrukturen des kastenförmigen Körpers stehen und in Arbeitsstellung der Stützausleger nicht in Eingriff mit den entsprechenden Eingriffsstrukturen des kastenförmigen Körpers stehen.

Auf diese Weise kann gewährleistet werden, dass die transportable Bearbeitungseinheit nur dann stabil auf den kastenförmigen Körper aufgesetzt werden kann, wenn sich die Stützausleger in der Transportstellung befinden. In Kombination mit der vorstehend beschriebenen Ausgestaltung, wonach eine Sicherheitsvorrichtung vorgesehen ist, die den Betrieb der transportablen Bearbeitungseinheit nur in der Arbeitsstellung erlaubt, kann gewährleistet werden, dass die transportable Bearbeitungseinheit in einem stabilen, gestapelten Zustand, in dem sie transportiert werden soll, nicht aus Versehen eingeschaltet werden kann.

In bevorzugter Ausgestaltung verfügt die Stützstruktur über Stützstruktur-Kopplungsmittel, die geeignet sind, eine lösbare, vertikal zugfeste Kopplung mit einem bzw. dem wenigstens einen kastenförmigen Körper bereitzustellen, wobei die an den Stützauslegern vorgesehenen Eingriffsstrukturen wenigstens einen Teil der Stützstruktur-Kopplungsmittel bilden und derart ausgebildet sind, dass die lösbare, vertikal zugfeste Kopplung bereitgestellt werden kann, wenn sich die Stützausleger in der Transportstellung befinden, und derart ausgebildet sind, dass die lösbare, vertikal zugefeste Kopplung nicht bereitgestellt werden kann, wenn sich wenigstens ein Stützausleger in der Arbeitsstellung befindet.

Durch die vertikal zugfeste Kopplung lässt sich die transportable Bearbeitungseinheit besonders gut im Stapel transportieren. Ferner kann auch diese Ausgestaltung in Kombination mit der vorstehend beschriebenen Sicherheitseinrichtung verhindern, dass die transportable Bearbeitungseinheit beim Transport aus Versehen eingeschaltet wird.

Eine beispielhafte Ausführungsform wird nachstehend unter Bezugnahme auf die Zeichnung erläutert. Dabei zeigt
- Figur 1: eine perspektivische Darstellung einer transportablen Bearbeitungseinheit mit Stützauslegern in Transportstellung;
- Figur 2: eine perspektivische Darstellung der transportablen Bearbeitungseinheit mit Stützauslegern in Arbeitsstellung;
- Figur 3: eine perspektivische Darstellung von oben auf einen Stützausleger;
- Figur 4: eine weitere perspektivische Darstellung von oben auf den Stützausleger;
- Figur 5: eine perspektivische Darstellung von unten auf den Stützausleger;
- Figur 6: eine weitere perspektivische Darstellung von unten auf den Stützausleger;
- Figur 7: eine perspektivische Darstellung einer transportablen Bearbeitungseinheit mit Oberteil;
- Figur 8: eine perspektivische Darstellung einer Stapelanordnung aus der transportablen Bearbeitungseinheit und zwei kastenförmigen Behältern
- Figur 9: eine perspektivische Darstellung eines Aufbaus aus einer transportablen Bearbeitungseinheit und einer Arbeitsplatte mit Lochraster;
- Figur 10: ein schematisches Blockdiagramm einer transportablen Bearbeitungseinheit;
- Figur 11: eine perspektivische Darstellung einer transportablen Bearbeitungseinheit von unten.

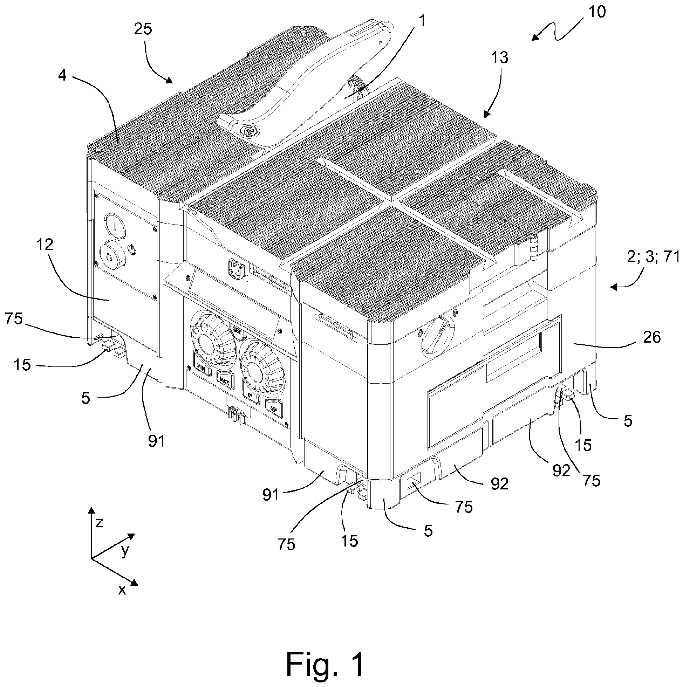

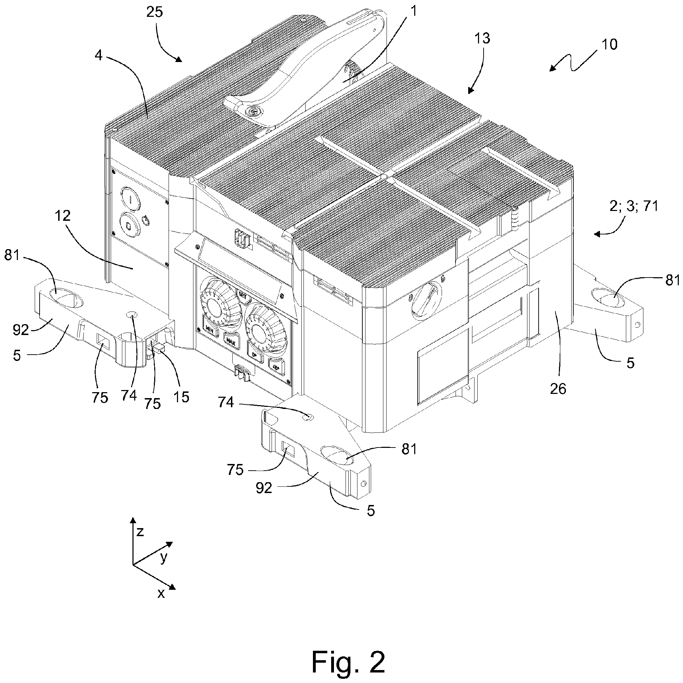

Die Figuren 1 und 2 zeigen perspektivische Darstellungen einer transportablen Bearbeitungseinheit 10, die zur Vergrößerung ihrer Standfläche über Stützausleger 5 verfügt. Die Figur 1 zeigt die Stützausleger 5 in einer Transportstellung, während die Figur 2 die Stützausleger in einer Arbeitsstellung zeigt.

Die transportable Bearbeitungseinheit 10 erstreckt sich in eine Vertikalrichtung, die parallel zu der in den Figuren eingezeichneten z-Achse verläuft, in eine Längsrichtung, die parallel zu der in den Figuren eingezeichneten x-Achse verläuft, und in eine Querrichtung, die parallel zu der in den Figuren eingezeichneten y-Achse verläuft. Die x-Achse, y-Achse und z-Achse sind orthogonal zueinander ausgerichtet. Die Längsrichtung und die Querrichtung werden nachstehend auch als horizontale Richtungen bezeichnet

Die transportable Bearbeitungseinheit 10 ist in den Figuren exemplarisch als Tischkreissäge ausgebildet. Alternativ dazu kann die transportable Bearbeitungseinheit 10 auch als eine andere halbstationäre Maschine, wie beispielsweise eine Oberfräse, Dekupiersäge oder ein Kantenschleifer, ausgebildet sein. Als halbstationäre Maschine soll in diesem Zusammenhang insbesondere eine Bearbeitungseinheit bezeichnet werden, die bei der Werkstückbearbeitung auf einer Unterlage abgestellt wird und die dazu geeignet ist, beim Transport von einer Person getragen zu werden.

Die transportable Bearbeitungseinheit 10 dient der Bearbeitung eines in den Figuren nicht gezeigten Werkstücks mit einem Werkzeug 1. Das Werkzeug 1 ist in den Figuren exemplarisch als Sägeblatt ausgebildet.

Die transportable Bearbeitungseinheit 10 umfasst eine auf einer Unterlage abstellbare kastenförmige Stützstruktur 2, die über eine zum Auflegen des zu bearbeitenden Werkstücks nutzbare Werkstück-Auflageplatte 4 verfügt. Bei der kastenförmigen Stützstruktur 2 handelt es sich zweckmäßigerweise um eine im Wesentlichen quaderförmige Struktur, bei der die Außenflächen, vorzugsweise sämtliche Außenflächen, im Wesentlichen geschlossen sind.

Ferner umfasst die transportable Bearbeitungseinheit 10 eine Antriebseinrichtung 73, beispielsweise einen Elektromotor, zum maschinellen Antrieb des Werkzeugs 1. Die Antriebseinrichtung 73 ist im diskutierten Beispiel vollständig in der Stützstruktur 2 angeordnet und an der Stützstruktur 2 betriebsbereit befestigt, so dass die Antriebseinrichtung bei der Bearbeitung des Werkstücks durch das von der Antriebseinrichtung 73 angetriebene Werkzeug 1 in der Stützstruktur 2 verbleibt.

Die Stützstruktur 2 verfügt über Stützausleger 5. Die Stützausleger 5 definieren in einem Zustand, in dem die Stützstruktur 2 auf der Unterlage abgestellt ist, eine Standfläche der Stützstruktur 2. Die Stützausleger sind wahlweise in einer Transportstellung oder in einer Arbeitsstellung positionierbar. Die Standfläche der Stützstruktur 2 ist in der Arbeitsstellung in wenigstens einer horizontalen Richtung größer als in der Transportstellung.

Durch die Vergrößerung der Standfläche in wenigstens einer horizontalen Richtung kann die Kippstabilität der transportablen Bearbeitungseinheit 10 im Betrieb erhöht werden. Dadurch wird die Betriebssicherheit verbessert.

Nachstehend werden beispielhafte Konfigurationen der transportablen Bearbeitungseinheit 10 im Detail erläutert.

Die Stützstruktur 2 ist kastenförmig ausgebildet und weist vier orthogonal zueinander ausgerichtete Umfangswände auf. Die Umfangswände umfassen eine Vorderwand 12, eine Rückwand 13, sowie Seitenwände 25 und 26. Die Vorderwand 12 und die Rückwand 13 sind parallel zu der Längsrichtung ausgerichtet, und die Seitenwände 25, 26 sind parallel zu der Querrichtung ausgerichtet.

Die Stützstruktur 2 verfügt über einen Grundkörper 71, an dem Stützausleger 5 gelagert sind. Die Kombination aus Grundkörper 71 und Stützausleger 5 wird nachfolgend auch als Unterteil 3 der Stützstruktur 2 bezeichnet.

Die Stützstruktur 2 verfügt über vier Stützausleger 5, die in den unterseitigen Eckbereichen der Stützstruktur 2 angeordnet sind. Die Stützstruktur 2 weist eine im Wesentlichen quaderförmige Grundgestalt auf. In der Transportstellung stellen die vier Stützausleger 5 die unteren vier Eckbereiche der quaderförmigen Grundgestalt dar. Der Grundkörper 71 weist entsprechende Aussparungen auf, in denen die vier Stützausleger 5 in der Transportstellung angeordnet sind, um so die unteren vier Eckbereich der quaderförmigen Grundgestalt der Stützstruktur 2 zu bilden. In der Arbeitsstellung sind die Stützausleger 5 jeweils nur teilweise in den Aussparungen angeordnet.

Ein horizontaler Querschnitt der Stützstruktur 2 weist eine im Wesentlichen rechteckige Außenkontur auf. Die Stützausleger 5 befinden sich in der Transportstellung innerhalb der rechteckigen Außenkontur. In der Arbeitsstellung ragen die Stützausleger 5 zumindest teilweise horizontal über die Außenkontur hinaus.

Die Stützausleger 5 sind jeweils um eine jeweilige vertikale Drehachse verschwenkbar an dem Grundkörper 71 gelagert. Die Stützausleger 5 sind an der Unterseite des Grundkörpers 71 an nach unten gerichtete Flächen der Aussparungen des Grundkörpers 71 gelagert. Aufgrund der schenkbeweglichen Lagerung um eine vertikal Achse verbleiben die Stützausleger 5 in der Transportstellung und in der Arbeitsstellung im Wesentlichen in dem gleichen vertikalen Bereich. Die Stützausleger 5 belegen somit in der Arbeitsstellung wie auch in der Transportstellung im Wesentlichen den gleichen Koordinatenbereich in z-Richtung.

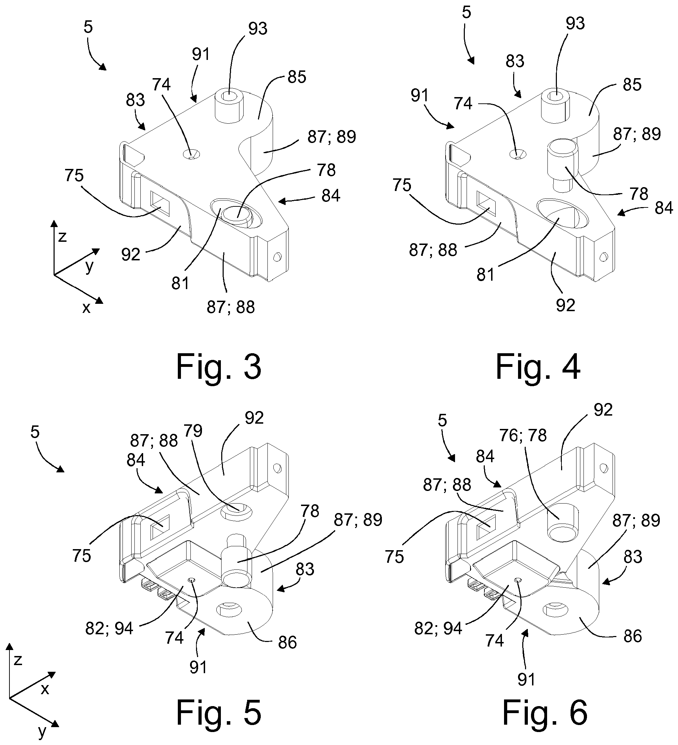

Die Figuren 3 bis 6 zeigen einen Stützausleger 5 im Detail. Die Figuren 3 und 4 zeigen den Stützausleger 5 dabei schräg von oben und die Figuren 5 und 6 schräg von unten. Bei dem gezeigten Stützausleger 5 handelt es sich um den Stützausleger 5, der in der Figur 1 vorne rechts angeordnet ist - also in dem unteren Eckbereich zwischen Vorderfläche 12 und Seitenfläche 26. Der in der Figur 1 vorne links angeordnete Stützausleger 5 ist als Spiegelung des vorne rechts angeordneten Stützauslegers 5 (beispielsweise an einer y-z-Spiegelebene) ausgebildet.

Der in den Figuren 3 bis 6 gezeigte Stützausleger 5 weist eine flache Grundgestalt auf; d.h. er erstreckt sich in horizontaler Richtung bzw. x- und/oder y-Richtung weiter als in vertikaler Richtung bzw. z-Richtung.

Der Stützausleger 5 ist im Wesentlichen in der Form eines Prismas bzw. allgemeinen Zylinders mit L-förmiger Grundfläche ausgebildet. Der Stützausleger 5 verfügt über einen ersten Armabschnitt 83 und einen zweiten Armabschnitt 84, die orthogonal zueinander ausgerichtet sind und zusammen eine L-Form bilden.

Der Stützausleger 5 verfügt über eine L-förmige obere Wand 85 und eine L-förmige untere Wand 86. Die obere und die untere Wand 85, 86 sind horizontal ausgerichtet. Der Stützausleger 5 verfügt ferner über eine Mantelfläche 87, die sich in einen konvexen und einen konkaven Abschnitt 88, 89 unterteilt. Der konvexe Abschnitt 88 weist eine erste und eine zweite Seitenwand 91, 92 auf, die orthogonal zueinander ausgerichtet sind. Die erste Seitenwand 91 ist dem ersten Armabschnitt 83 zugeordnet und die zweite Seitenwand 92 dem zweiten Armabschnitt 84.

Wie in der Figur 1 zu sehen, bildet die erste Seitenwand 91 in Transportstellung des vorderen, rechten Stützauslegers 5 einen Teil der Vorderwand 12 der Stützstruktur 2 und die zweite Seitenwand 92 bildet einen Teil der Seitenwand 26 der Stützstruktur 2.

Der Stützausleger 5 verfügt an seiner oberen Wand 85 an einem distalen Ende des ersten Armabschnitts 83 über eine Lagerkomponente 93, mit der er um eine vertikale Achse verschwenkbar an dem Grundkörper 71 angebracht ist.

Der Stützausleger 5 kann um die vertikale Achse um etwa 90 Grad verschwenkt werden, um so von der Transportstellung in die Arbeitsstellung positioniert zu werden. In der Arbeitsstellung ist die zweite Seitenwand 92 parallel zur Vorderwand 12 angeordnet und befindet sich in Querrichtung vor der Vorderwand 12.

Wie in den Figuren 5 und 6 zu sehen, weist der Stützausleger 5 an seiner unteren Wand 86 in dem Bereich, wo die beiden Armabschnitte 83, 84 zusammenlaufen, eine als Standfuß ausgebildete Eingriffsstruktur 82 auf, die als flacher Vorsprung nach unten geformt ist. Die untere Fläche 94 der Eingriffsstruktur 82 stellt eine Kontaktfläche zwischen dem Stützausleger 5 und einer Unterlage, auf der die transportable Bearbeitungseinheit 10 abgestellt ist, bereit.

Der Stützausleger 5 verfügt über ein vertikal verlaufendes Durchgangsloch 74. Das Durchgangsloch 74 verläuft von der oberen Wand 85 zu der unteren Fläche 94 der Eingriffsstruktur 82. Das Durchgangsloch 74 ist zum Einsetzen einer Schraube geeignet, mit der die Stützstruktur 2 auf einer Unterlage fixiert werden kann.

Der Stützausleger 5 verfügt ferner über eine horizontal verlaufende Aufnahme 75. Die Aufnahme 75 hat einen rechteckigen Querschnitt und mündet an der zweiten Seitenwand 92 aus. Die Aufnahme 75 ist zum Einsetzen eines Spannarms einer Zwinge geeignet, mit der die Stützstruktur 2 auf der Unterlage fixiert werden kann. Die Aufnahme 75 verläuft über der Eingriffsstruktur 82. Wie in der Figur 1 zu sehen, kann der Stützausleger zusätzlich dazu eine Aufnahme 75 aufweisen, die an der ersten Seitenwand 91 ausmündet.

Der Stützausleger 5 verfügt ferner über einen vertikal nach unten ragenden, zylindrischen Fuß 76.

Im gezeigten Beispiel ist der zylindrischen Fuß 76 als Bolzen 78 ausgebildet.

Der Bolzen 78 ist wahlweise in eine Fixierstellung oder in eine Aufbewahrungsstellung positionierbar. In der Figur 3 ist der Bolzen 78 in der Aufbewahrungsstellung gezeigt und in der Figur 6 in der Fixierstellung. In der Fixierstellung ist der Bolzen 78 herausnehmbar in einer unterseitig an dem Stützausleger 5 vorgesehenen Einsetz-Öffnung 79 eingesetzt. In der Aufbewahrungsstellung ist der Bolzen 78 in einer oberseitig an dem Stützausleger 5 vorgesehenen Aufbewahrungsöffnung 81 untergebracht. In der Aufbewahrungsstellung ragen die zylindrischen Füße 76 nicht vertikal nach unten.

Im gezeigten Beispiel gehören die Einsetz-Öffnung 79 und die Aufbewahrungsöffnung 81 zum selben Durchgangsloch. In diesem Durchgangsloch und am Bolzen 78 können, wie gezeigt, einander entsprechende Ringschultern vorgesehen sein, die einen vertikalen Formschluss bereitstellen und so verhindern, dass der Bolzen 78 aus dem Durchgangsloch herausfällt bzw. nach oben durchrutscht.

Wie vorstehend bereits erläutert, ist der in der Figur 1 vorne links angeordnete Stützausleger 5 als Spiegelung des vorne rechts angeordneten Stützauslegers 5 ausgebildet.

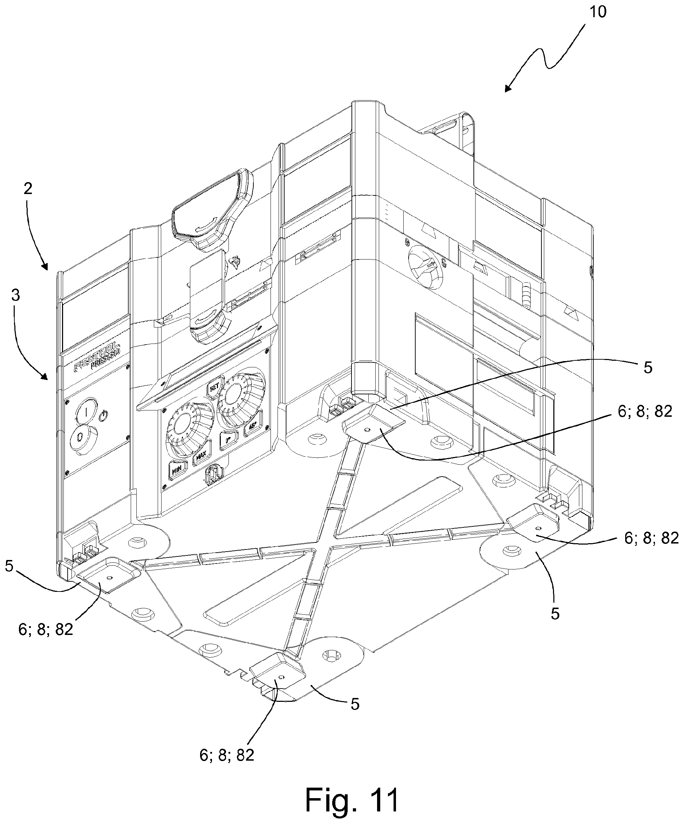

Der in den Figuren nicht sichtbare hinten links angeordnete Stützausleger 5 weist die vorstehend im Zusammenhang mit dem vorne rechts angeordneten Stützausleger 5 diskutierten Merkmale auf, unterscheidet sich von diesem jedoch insbesondere dadurch, dass, wie nachstehend noch erläutert, die als Standfuß ausgebildete Eingriffsstruktur 82 des hinten links angeordneten Stützauslegers 5 einen profilierten, beispielsweise keilförmig profilierten Hintergreifabschnitt aufweist. In der Figur 11 sind die Eingriffsstrukturen 82 der vorderen und hinteren Stützausleger 5 zu sehen.

Ferner unterscheidet sich der hinten links angeordnete Stützausleger 5 von dem vorne rechts angeordneten Stützausleger 5 dadurch, dass nachstehend noch erläuterte zweite Verriegelungsankerkonturen 15 nicht an der ersten Seitenwand sondern an der zweiten Seitenwand vorgesehen sind. Der hinten rechts angeordnete Stützausleger 5 ist als Spiegelung des hinten links angeordneten Stützauslegers ausgebildet.

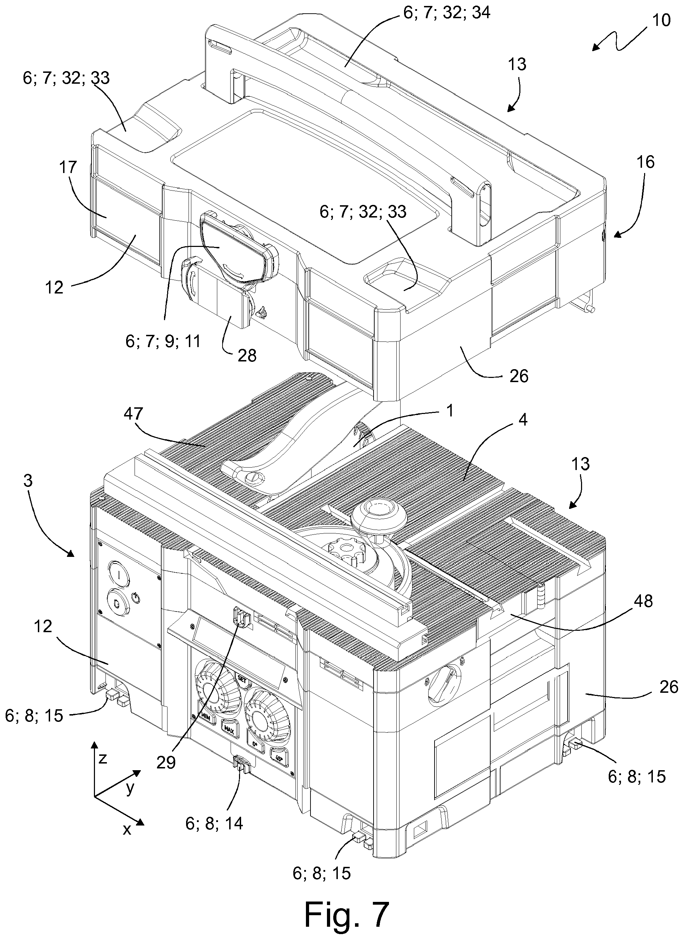

Die Figur 7 zeigt eine transportable Bearbeitungseinheit 10, bei der die Stützstruktur 2 zusätzlich zum Unterteil 3 über ein auf das Unterteil 3 aufsetzbares Oberteil 16 verfügt. Wie nachstehend erläutert, dient das Oberteil 16 insbesondere dazu, die transportable Bearbeitungseinheit 10 in einem Stapel aus kastenförmigen Körpern vertikal zugfest unterzubringen.

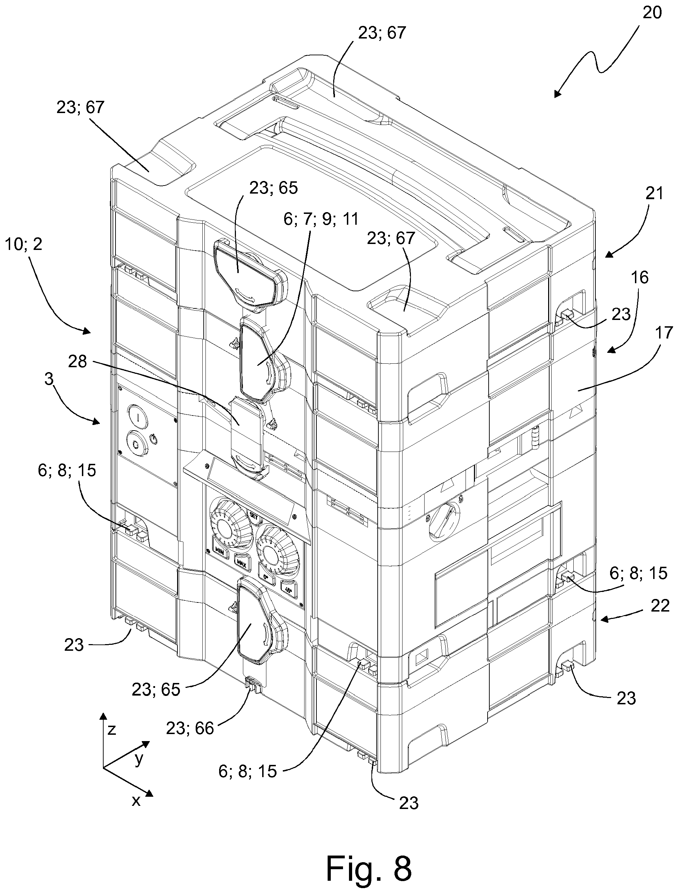

Die Stützstruktur 2 verfügt über Stützstruktur-Kopplungsmittel 6. Die Stützstruktur-Kopplungsmittel 6 sind dazu geeignet, in einem in der Figur 8 gezeigten Zustand, in dem die Stützstruktur 2 zusammen mit kastenförmigen Körpern 21, 22 einen vertikalen Stapel bildet, eine lösbare, vertikal zugfeste Kopplung mit den kastenförmigen Körpern 21, 22 bereitzustellen.

Die transportable Bearbeitungseinheit 10 kann aufgrund der Stützstruktur-Kopplungsmittel 6 stabil in einem Stapel aus kastenförmigen Körpern, wie beispielsweise kastenförmigen Behältern und/oder weiteren transportablen Bearbeitungseinheiten 10 untergebracht werden. Die transportable Bearbeitungseinheit 10 kann daher im Stapel sehr praktisch verstaut und/oder sicher transportiert werden.

Wie in den Figuren zu sehen ist, weist die transportable Bearbeitungseinheit 10 insbesondere die Grundgestalt einer Systemkiste auf. Die in den Figuren gezeigte transportable Bearbeitungseinheit 10 ist ausgebildet, in einem Stapel von weiteren Systemkisten untergebracht zu werden. Die Grundgestalt der transportablen Bearbeitungseinheit wird insbesondere durch die kastenförmige Stützstruktur definiert. Vorzugsweise stellen die Außenflächen der Stützstruktur das Gehäuse bzw. die äußeren Gehäuseflächen der transportablen Bearbeitungseinheit 10 dar. Das Gehäuse bzw. die Grundgestalt der transportablen Bearbeitungseinheit weist insbesondere die Form einer Systemkiste auf. Systemkisten eines Systems verfügen über eine in dem System definierte Grundfläche und weisen in dem System definierte Kopplungsmittel auf, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Ist die Grundgestalt bzw. das Gehäuse der erfindungsgemäßen Bearbeitungseinheit in der Form einer Systemkiste ausgebildet, so kann die transportable Bearbeitungseinheit in praktischer Weise in einem Stapel aus Systemkisten verstaut und transportiert werden.

Wie vorstehend bereits erwähnt, verfügt die Stützstruktur 2 über das abnehmbar an dem Unterteil 3 anbringbare Oberteil 16. Die Figur 7 zeigt die Bearbeitungseinheit 10 in einem Zustand, in dem das Oberteil 16 von dem Unterteil 3 abgenommen ist. In der Figur 8 ist das Oberteil 16 auf das Unterteil 3 aufgesetzt und an dieses vertikal zugfest gekoppelt.

Die Stützstruktur-Kopplungsmittel 6 umfassen obere Stützstruktur-Kopplungsmittel 7, die an dem Oberteil 16 vorgesehen sind. Die Stützstruktur-Kopplungsmittel 7 sind dazu geeignet, in einem Zustand, in dem ein kastenförmiger Körper 21 auf die transportable Bearbeitungseinheit 10 gestapelt ist, eine lösbare, vertikal zugfeste Kopplung mit dem kastenförmigen Körper bereitzustellen. Die oberen Stützstruktur-Kopplungsmittel 7 umfassen ein beweglich gelagertes Verriegelungselement 9. Im gezeigten Beispiel umfasst das Verriegelungselement 9 einen an der Stützstruktur 2 drehbar gelagerten Drehriegel 11. Der Drehriegel 11 ist an der Vorderwand 12 der Stützstruktur 2 angeordnet. Die Drehachse des Drehriegels 11 verläuft orthogonal zu der Vorderwand 12.

Die Stützstruktur-Kopplungsmittel 6 umfassen ferner untere Stützstruktur-Kopplungsmittel 8, die an dem Unterteil 3 vorgesehen sind. Die unteren Stützstruktur-Kopplungsmittel sind dazu geeignet, in einem Zustand, in dem die transportable Bearbeitungseinheit 10 auf einen kastenförmigen Körper 22 gestapelt ist, eine lösbare, vertikal zugefeste Kopplung mit dem kastenförmigen Körper 22 bereitzustellen. Die unteren Stützstruktur-Kopplungsmittel 8 umfassen wenigstens eine an der Stützstruktur 2 ortsfest angeordnete erste Verriegelungsankerkontur 14. Im gezeigten Beispiel ist die erste Verriegelungsankerkontur 14 am Unterteil der Stützstruktur 2 angeordnet. Die erste Verriegelungsankerkontur 14 befindet sich an der Vorderwand 12 der Stützstruktur und ist in Bezug auf die Längsrichtung mittig an der Stützstruktur 2 angeordnet. Die erste Verriegelungsankerkontur 14 ist als Verriegelungsvorsprung ausgebildet und steht von der Vorderwand 12 ab.

Das Verriegelungselement 9 und die erste Verriegelungsankerkontur 14 sind derart angeordnet, dass bei zwei vertikal übereinander gestapelten transportablen Bearbeitungseinheiten 10 das Verriegelungselement 9 der einen transportablen Bearbeitungseinheit in Kopplungseingriff mit der ersten Verriegelungsankerkontur 14 der anderen Bearbeitungseinheit gebracht werden kann.

Im gezeigten Beispiel weisen die unteren Stützstruktur-Kopplungsmittel 8 zusätzlich zu der ersten Verriegelungsankerkontur 14 auch noch zweite Verriegelungsankerkonturen 15 auf. Die zweiten Verriegelungsankerkonturen 15 sind als Verriegelungsvorsprünge ausgebildet und an den ersten Seitenwänden 91 der vorderen Stützausleger 5 sowie an den zweiten Seitenwänden der hinteren Stützausleger 5 angeordnet. In der Transportstellung sind die zweiten Verriegelungsankerkonturen 15 folglich in den unteren Eckbereichen der Vorderwand 12 sowie in den unteren, an der Rückwand 13 gelegenen Eckbereichen der Seitenwände 25 und 26 angeordnet.

Die zweiten Verriegelungsankerkonturen 15 dienen dazu, die transportable Bearbeitungseinheit 10 an Behälter oder andere Gegenstände anzukoppeln, die über zu den zweiten Verriegelungsankerkonturen 15 komplementäre Verriegelungselemente verfügen. Sofern nicht vorgesehen ist, dass die transportable Bearbeitungseinheit 10 auch an derartige Behälter bzw. Gegenstände gekoppelt werden soll, kann auf die zweiten Verriegelungsankerkonturen 15 auch verzichtet werden.

Die oberen Stützstruktur-Kopplungsmittel 7 umfassen ferner eine Mehrzahl von an der Oberseite der Stützstruktur 2 verteilt angeordneten Eingriffsstrukturen, die als Eingriffsvertiefungen 32 ausgebildet sind. Die Eingriffsvertiefungen 32 umfassen zwei im der Nähe der Vorderwand 12 angeordnete erste Eingriffsvertiefungen 33 sowie eine in der Nähe der Rückwand 13 angeordnete zweite Eingriffsvertiefung 34.

Die unteren Stützstruktur-Kopplungsmittel 8 umfassen die vorstehend bereits diskutierten Eingriffsstrukturen 82, die an der unteren Wand 86 der Stützausleger 5 angeordnet sind und sich folglich in der Transportstellung in den vier Eckbereichen der Unterseite der Stützstruktur 2 befinden. Die Eingriffsstrukturen 82 und die Eingriffsvertiefungen 33, 34 sind derart angeordnet, dass bei zwei vertikal übereinander gestapelten transportablen Bearbeitungseinheiten 10 die Eingriffsstrukturen 82 der oberen transportablen Bearbeitungseinheit mit den Eingriffsvertiefungen 32 der unteren Bearbeitungseinheit in Eingriff stehen, sofern sich die Stützausleger 5 in der Transportstellung befinden.

Die Eingriffsstrukturen 82 und die Eingriffsvertiefungen 32 tragen zur Kopplung in vertikaler Richtung bei. Dies kann durch einen verriegelnden Eingriff von Hintergreifbestandteilen der Eingriffsstrukturen 82 und/oder Eingriffsvertiefungen 32 erfolgen, wie dies beispielsweise in der EP2315701B1 im Detail beschrieben ist. Beispielsweise kann die zweite Eingriffsvertiefung 34 einen hinterschnittenen Querschnitt aufweisen und die entsprechenden, in die zweite Eingriffsvertiefung 34 greifenden Eingriffsstrukturen 82 können einen entsprechend profilierten, beispielsweise keilförmig profilierten Hintergreifabschnitt aufweisen, wie dies z.B. in der Figur 11 gezeigt ist.

Das Oberteil 16 der Stützstruktur 2 ist als haubenförmige Abdeckung ausgebildet. In dem in der Figur 8 gezeigten Zustand deckt das Oberteil 16 die Werkzeug-Auflageplatte 4 ab. Das Oberteil 16 umfasst eine sich in vertikaler Richtung über die Werkstück-Auflageplatte 4 nach oben erstreckende Rahmenstruktur 17. Der horizontale Querschnitt des Oberteils 16 bzw. der Rahmenstruktur 17 weist im Wesentlichen die gleiche Außenkontur wie der horizontale Querschnitt des Unterteils 3 auf. Das Oberteil 16 ist fluchtend zu dem Unterteil 3 angeordnet, so dass es zusammen mit dem Unterteil 3 die kastenförmige Stützstruktur 2 bildet.

Wie in der Figur 7 gezeigt, weist die Rahmenstruktur 17 im Wesentlichen die Form einer Quadermantelfläche auf; d.h. die Rahmenstruktur 17 weist vier orthogonal zueinander ausgerichtete Umfangswände auf und verfügt über eine offene Unterseite und eine offene Oberseite.

Die Rahmenstruktur 17 erstreckt sich in vertikaler Richtung nach oben über das an der Antriebseinrichtung angebrachte Werkzeug 1 hinaus. Auf diese Weise kann das Werkzeug 1 an der Antriebseinrichtung 5 verbleiben, auch wenn die transportable Bearbeitungseinheit 10 in einem Stapel angeordnet ist,

Das Oberteil 16 verfügt über Oberteil-Kopplungsmittel 28 und das Unterteil 3 verfügt über Unterteil-Kopplungsmittel 29. Mit Hilfe der Oberteil-Kopplungsmittel 28 und der Unterteil-Kopplungsmittel 29 kann das Oberteil 16 lösbar, vertikal zugfest an das Unterteil 3 angekoppelt werden.

Die Oberseite der Werkstück-Auflageplatte 4 ist im gezeigten Beispiel mit Rillen versehen. Alternativ dazu kann die Oberseite der Werkstück-Auflageplatte 4 auch ohne Rillen bzw. eben oder mit einer anderen Strukturierung versehen sein.

Das Sägeblatt liegt auf einer in Querrichtung verlaufenden, gedachten Linie, die die Werkstück-Auflageplatte 4 in Längsrichtung in zwei Plattenabschnitte 47 und 48 unterteilt. Vorzugsweise ist der erste Plattenabschnitt 47 relativ zum Werkzeug 1 fixiert, während der zweite Plattenabschnitt 48 zumindest in Querrichtung verschiebbar gelagert ist, so dass er relativ zum Werkzeug 1 in Querrichtung verschoben werden kann. Mit dem verschiebbar gelagerten zweiten Plattenabschnitt 48 kann ein Werkstück bei der Verarbeitung relativ zum Werkzeug 1 geführt bzw. bewegt werden.

Gerade bei ausgefahrenem Plattenabschnitt 48 ist die durch die verschwenkbaren Stützausleger 5 erzielbare vergrößerte Standfläche und die damit einhergehende verbesserte Kippstabilität vorteilhaft.

In der Figur 8 ist beispielhaft gezeigt, wie die transportable Bearbeitungseinheit 10 in einem Stapel mit zwei weiteren kastenförmigen Körpern 21, 22 angeordnet ist.

Die in der Figur 5 gezeigte Stapelanordnung 20 umfasst die vorstehend diskutierte transportable Bearbeitungseinheit 10 einen oberen kastenförmigen Körper 21, der auf der transportablen Bearbeitungseinheit 10 angeordnet ist, sowie einen unteren kastenförmigen Körper 22, der unter der transportablen Bearbeitungseinheit 10 angeordnet ist. Die beiden kastenförmigen Körper 21, 22 sind in der Figur 8 exemplarisch als kastenförmige Behälter ausgebildet. Alternativ dazu kann auch jeder der kastenförmigen Körper 21, 22 als eine weitere Bearbeitungseinheit 10 ausgeführt sein.

Die beiden kastenförmigen Körper 21, 22 bilden zusammen mit der transportablen Bearbeitungseinheit 10 einen vertikalen Stapel. Die kastenförmigen Körper 21, 22 weisen Körper-Kopplungsmittel 23 auf, die mit den Stützstruktur-Kopplungsmitteln 6 zusammenwirken, um eine lösbare, vertikal zugefeste Kopplung zwischen den kastenförmigen Körpern 21, 22 und der transportablen Bearbeitungseinheit 10 bereitzustellen.

Der horizontale Querschnitt der transportablen Bearbeitungseinheit 10 weist im Wesentlichen die gleiche Außenkontur wie der horizontale Querschnitt der kastenförmigen Körper 21, 22 auf. Die transportable Bearbeitungseinheit 10 ist fluchtend zu den kastenförmigen Körpern 21, 22 angeordnet, so dass die transportable Bearbeitungseinheit 10 und die kastenförmigen Körper 21, 22 zusammen einen im Wesentlichen quaderförmigen Stapel bilden.

Die Körper-Kopplungsmittel 23 können identisch zu den Stützstruktur-Kopplungsmitteln 6 ausgebildet sein. Die Kopplung zwischen den Körper-Kopplungsmitteln 23 und den Stützstruktur-Kopplungsmitteln 6 kann dann in gleicher Weise erfolgen wie die vorstehend beschriebene Kopplung zwischen Stützstruktur-Kopplungsmitteln 6 zweier transportabler Bearbeitungseinheiten 10.

Insbesondere umfassen die Körper-Kopplungsmittel 23 ein vorzugsweise als Drehriegel ausgebildetes Verriegelungselement 65, eine Verriegelungsankerkontur 66, sowie Eingriffsstrukturen 67.

In der Figur 8 steht die Verriegelungsankerkontur 66 des oberen, auf die transportable Bearbeitungseinheit 10 aufgesetzten kastenförmigen Körpers 21 in Kopplungseingriff mit dem Verriegelungselement 9 der transportablen Bearbeitungseinheit 10. Die Verriegelungsankerkontur 14 der transportablen Bearbeitungseinheit steht in Kopplungseingriff mit dem Verriegelungselement 65 des unteren kastenförmigen Körpers 22.

Ferner weist der obere kastenförmige Körper 21 an seiner Unterseite Eingriffsstrukturen auf, die den vorstehend diskutierten Eingriffsstrukturen 82 der transportablen Bearbeitungseinheit 10 entsprechen und die in die Eingriffsvertiefungen 32 der transportablen Bearbeitungseinheit greifen. Ferner weist der untere kastenförmige Körper 22 an seiner Oberseite Eingriffsvertiefungen auf, die den vorstehend diskutierten Eingriffsvertiefungen 32 der transportablen Bearbeitungseinheit 10 entsprechen und die mit den Eingriffsstrukturen 82 der transportablen Bearbeitungseinheit 10 in Eingriff stehen.

Dadurch, dass die Eingriffsstrukturen 82 an den Stützauslegern 5 vorgesehen sind, ändern sie bei der Positionierung der Stützausleger 5 ihre Stellung relativ zu den Eingriffsvertiefungen des unteren kastenförmigen Körpers 22. Die Eingriffsstrukturen 82 können nur in Transportstellung in Eingriff mit den entsprechenden Eingriffsvertiefungen des kastenförmigen Körpers 22 gebracht werden. In Arbeitsstellung der Stützausleger 5 ist es nicht möglich, die Eingriffsstrukturen 82 in Eingriff mit den entsprechenden Eingriffsvertiefungen des kastenförmigen Körpers 22 zu bringen.

Wie vorstehend bereits beschrieben, sind die Eingriffsstrukturen und Eingriffsvertiefungen auch an der vertikal zugfesten Kopplung beteiligt. Dadurch, dass die Eingriffsstrukturen 82 an den Stützauslegern 5 vorgesehen sind, kann die lösbare, vertikal zugfeste Kopplung nur dann bereitgestellt werden, wenn sich die Stützausleger 5 in der Transportstellung befinden. Die lösbare, vertikal zugefeste Kopplung kann nicht bereitgestellt werden, wenn sich wenigstens ein Stützausleger 5 in der Arbeitsstellung befindet.

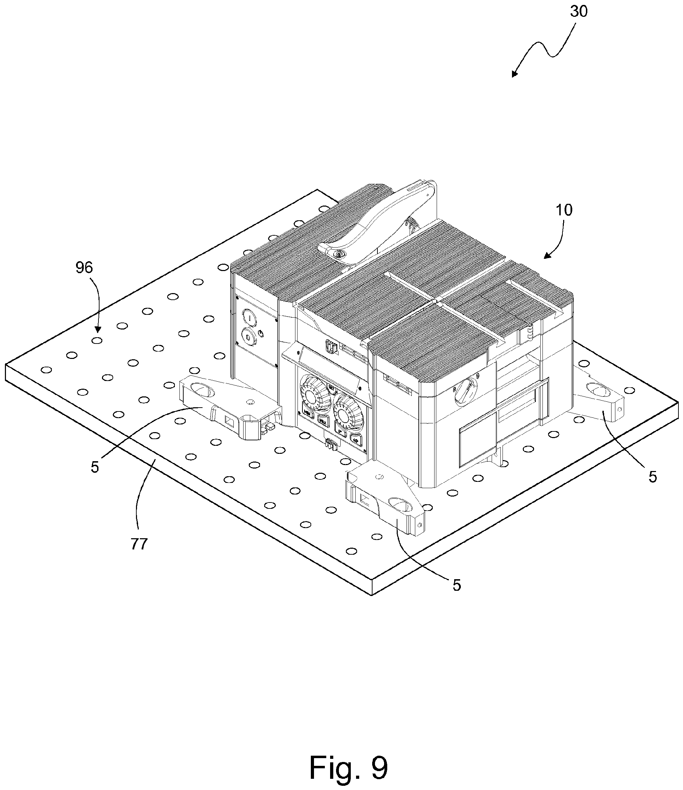

Die Figur 9 zeigt einen Aufbau 30 umfassend eine transportable Bearbeitungseinheit 10 sowie eine mit einem Lochraster 96 versehene Arbeitsplatte 77. Die transportable Bearbeitungseinheit 10 ist derart auf der Arbeitsplatte 77 positioniert, dass die zylindrischen Füße 76 in jeweilige Löcher des Lochrasters 96 greifen und dadurch die transportable Bearbeitungseinheit 10 relativ zur Arbeitsplatte 77 zumindest in horizontaler Richtung fixieren. Das Lochraster 96 ist exemplarisch matrixförmig ausgebildet.

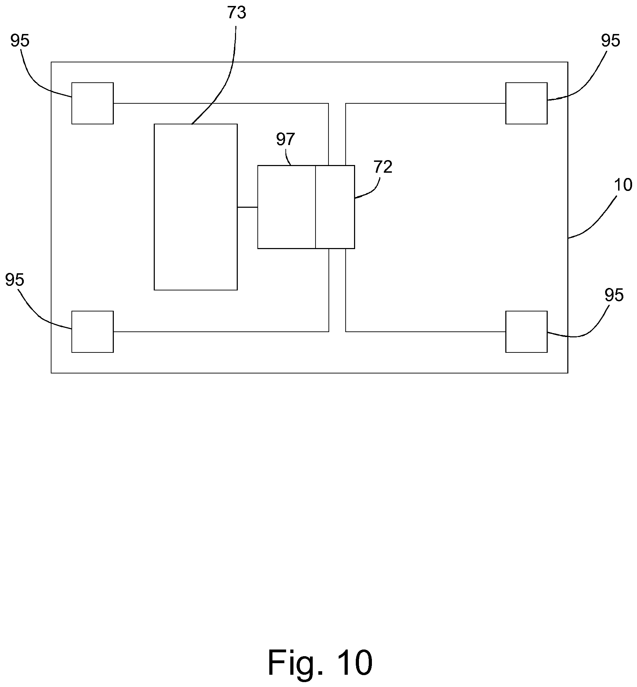

Die Figur 10 zeigt ein schematisches Blockdiagramm der transportablen Bearbeitungseinheit 10. Zum Zwecke der besseren Übersichtlichkeit sind in der Figur 10 nicht sämtliche Komponenten der transportablen Bearbeitungseinheit 10 gezeigt, sondern stattdessen nur diejenigen Komponenten, die nachstehend auch erläutert werden.

Die transportable Bearbeitungseinheit 10 umfasst eine Ansteuerelektronik 97, die dazu dient, die Antriebseinrichtung 73 anzusteuern. Die transportable Bearbeitungseinheit 10 umfasst ferner eine Sicherheitseinrichtung 72, die beispielsweise eine Komponente der Ansteuerelektronik 97 ist. Die Sicherheitseinrichtung 72 kann insbesondere als Hardwarekomponente und/oder Softwarekomponente ausgebildet sein. Die transportable Bearbeitungseinheit 10 umfasst ferner Stellungssensoren 95, die dazu ausgebildet sind, zu erfassen, ob sich die Stützausleger 5 in der Arbeitsstellung befinden. Im gezeigten Beispiel umfasst die transportable Bearbeitungseinheit vier Stellungssensoren 95, wobei jeder Stellungsensor 95 einem jeweiligen Stützausleger 5 zugeordnet ist. Alternativ dazu ist es auch möglich, dass nicht für jeden Stützausleger 5 ein eigener Stellungssensor 95 vorgesehen ist. Beispielsweise kann insgesamt auch nur ein Stellungsensor 95 vorgesehen sein. In diesem Fall können die Stützausleger 5 mechanisch aneinander gekoppelt sein, so dass sie sich nur gemeinsam in die Arbeitsstellung und/oder die Transportstellung versetzen lassen, und daher von der erfassten Stellung eines Stützauslegers 5 auf die Stellungen der anderen Stützausleger 5 geschlossen werden kann.

Die Sicherheitseinrichtung 72 empfängt von den Stellungssensoren 95 die erfassten Stellungen der Stützausleger 5. Die Sicherheitseinrichtung 72 ist ausgebildet, zu verhindern, dass die Antriebseinrichtung 73 mit Leistung versorgt wird, sofern sich wenigstens einer der Stützausleger 5 nicht in der Arbeitsstellung befindet.

Beispielsweise ist die Sicherheitseinrichtung 72 ausgebildet, die Ansteuerelektronik 97 in einen Zustand zu versetzen, in der diese die Antriebseinrichtung nicht mit Leistung versorgt, sofern sich wenigstens einer der Stützausleger 5 nicht in der Arbeitsstellung befindet. Dies kann beispielsweise softwaremäßig durch das Hinterlegen einer entsprechenden Information und/oder hardwaremäßig durch das Öffnen/Schließen eines Schalters erfolgen.

## Patentansprüche

1. Transportable Bearbeitungseinheit (10), insbesondere Tischkreissäge, zur Bearbeitung eines Werkstücks mit einem Werkzeug (1), umfassend eine auf einer Unterlage abstellbare kastenförmige Stützstruktur (2), die über eine zum Auflegen des zu bearbeitenden Werkstücks nutzbare Werkstück-Auflageplatte (4) verfügt, sowie eine Antriebseinrichtung (73) zum maschinellen Antrieb des Werkzeugs (1), die zumindest teilweise in der Stützstruktur (2) angeordnet und daran betriebsbereit befestigt ist, so dass die Antriebseinrichtung (73) bei der Bearbeitung des Werkstücks durch das von der Antriebseinrichtung (73) angetriebene Werkzeug (1) zumindest teilweise in der Stützstruktur verbleibt, wobei die Stützstruktur (2) über Stützausleger (5) verfügt, die in einem Zustand, in dem die Stützstruktur (2) auf der Unterlage abgestellt ist, eine Standfläche der Stützstruktur (2) definieren, und die wahlweise in einer Transportstellung oder in einer Arbeitsstellung positionierbar sind, wobei die Standfläche der Stützstruktur (2) in der Arbeitsstellung in wenigstens einer horizontalen Richtung größer ist als in der Transportstellung, **gekennzeichnet durch** eine Sicherheitseinrichtung (72), die ausgebildet ist, zu verhindern, dass die Antriebseinrichtung (73) mit Leistung versorgt wird, sofern sich wenigstens einer der Stützausleger (5) nicht in der Arbeitsstellung befindet.

2. Transportable Bearbeitungseinheit (10) nach Anspruch 1, **dadurch gekennzeichnet, dass** die Stützstruktur (2) über einen Grundkörper (71) verfügt und die Stützausleger (5) derart verschwenkbar und/oder verschiebbar an dem Grundkörper (71) gelagert sind, dass die Stützausleger (5) in der Transportstellung und in der Arbeitsstellung im Wesentlichen in dem gleichen vertikalen Bereich verbleiben.

3. Transportable Bearbeitungseinheit (10) nach Anspruch 1 oder 2, **dadurch gekennzeichnet, dass** die Stützstruktur (2) über einen Grundkörper (71) verfügt und jeder der Stützausleger (5) um eine jeweilige vertikale Drehachse verschwenkbar an dem Grundkörper (71) gelagert ist.

4. Transportable Bearbeitungseinheit (10) nach einem der Ansprüche 1 bis 3, **dadurch gekennzeichnet, dass** ein horizontaler Querschnitt der Stützstruktur (2) eine im Wesentlichen rechteckige Außenkontur aufweist, wobei sich die Stützausleger (5) in der Transportstellung innerhalb der rechteckigen Außenkontur befinden und die Stützausleger (5) in der Arbeitsstellung zumindest teilweise horizontal über die Außenkontur hinausragen.

5. Transportable Bearbeitungseinheit (10) nach einem der Ansprüche 1 bis 4, **dadurch gekennzeichnet, dass** die Stützausleger (5) in unterseitigen Eckbereichen der Stützstruktur (2) angeordnet sind.

6. Transportable Bearbeitungseinheit (10) nach einem der Ansprüche 1 bis 5, **dadurch gekennzeichnet, dass** sich die Stützausleger (5) jeweils in horizontaler Richtung weiter erstrecken als in vertikaler Richtung, so dass die Stützausleger (5) jeweils eine flache Grundgestalt aufweisen, wobei die Stützausleger (5) vorzugsweise jeweils eine im Wesentlichen L-förmige Grundfläche aufweisen.

7. Transportable Bearbeitungseinheit (10) nach einem der Ansprüche 1 bis 6, **dadurch gekennzeichnet, dass** wenigstens einer der Stützausleger (5) über ein vertikal verlaufendes Durchgangsloch (74) verfügt, das zum Einsetzen einer Schraube geeignet ist, mit der die Stützstruktur (2) auf der Unterlage fixiert werden kann.

8. Transportable Bearbeitungseinheit (10) nach einem der Ansprüche 1 bis 7, **dadurch gekennzeichnet, dass** wenigstens einer der Stützausleger (5) über eine horizontal verlaufende Aufnahme (75) verfügt, die zum Einsetzen eines Spannarms einer Zwinge geeignet ist, mit der die Stützstruktur (2) auf der Unterlage fixiert werden kann.

9. Transportable Bearbeitungseinheit (10) nach einem der Ansprüche 1 bis 8, **dadurch gekennzeichnet, dass** die Stützausleger (5) jeweils über einen vertikal nach unten ragenden, zylindrischen Fuß (76) verfügen, wobei die zylindrischen Füße (76) vorzugsweise derart voneinander beabstandet sind, dass sie in der Arbeitsstellung und/oder Transportstellung der Stützausleger (5) in ein vorbestimmtes Lochraster einer Arbeitsplatte (77) passen.

10. Transportable Bearbeitungseinheit (10) nach Anspruch 9, **dadurch gekennzeichnet, dass** die zylindrischen Füße (76) wahlweise in eine Fixierstellung oder Aufbewahrungsstellung positionierbar sind, wobei die zylindrischen Füße (76) in der Aufbewahrungsstellung nicht oder weniger weit vertikal nach unten ragen als in der Fixierstellung.

11. Transportable Bearbeitungseinheit nach Anspruch 10, **dadurch gekennzeichnet, dass** die zylindrischen Füße (76) als Bolzen (78) ausgebildet sind, die in der Fixierstellung herausnehmbar in unterseitig an den Stützauslegern (5) vorgesehene Einsetz-Öffnungen (79) eingesetzt sind und zweckmäßigerweise in der Aufbewahrungsstellung in vorzugsweise oberseitig an den Stützauslegern (5) vorgesehenen Aufbewahrungs-Öffnungen (81) untergebracht sind.

12. Aufbau (30) umfassend eine transportable Bearbeitungseinheit (10) gemäß einem der Ansprüche 9 bis 11 sowie eine mit einem Lochraster (96) versehene Arbeitsplatte (77), wobei die transportable Bearbeitungseinheit (10) derart auf der Arbeitsplatte (77) positioniert ist, dass die zylindrischen Füße (76) in jeweilige Löcher des Lochrasters (96) greifen und dadurch die transportable Bearbeitungseinheit (10) relativ zur Arbeitsplatte (77) zumindest in horizontaler Richtung fixieren.

13. Stapelanordnung (20) umfassend eine transportable Bearbeitungseinheit (10) nach einem der Ansprüche 1 bis 11 sowie einen kastenförmigen Körper (22), der unter der transportablen Bearbeitungseinheit (10) angeordnet ist, um zusammen mit der transportablen Bearbeitungseinheit (10) 20 einen vertikalen Stapel zu bilden, wobei an den Stützauslegern (5) Eingriffsstrukturen (82) vorgesehen sind, die derart ausgebildet sind, dass sie in Transportstellung der Stützausleger (5) in Eingriff mit entsprechenden Eingriffsstrukturen (67) des kastenförmigen Körpers stehen und in Arbeitsstellung der Stützausleger (5) nicht in Eingriff mit den entsprechenden Eingriffsstrukturen (67) des kastenförmigen Körpers stehen.

14. Stapelanordnung (20) nach Anspruch 13, wobei die Stützstruktur (2) über Stützstruktur-Kopplungsmittel (6) verfügt, die geeignet sind, eine lösbare, vertikal zugfeste Kopplung mit dem wenigstens einen kastenförmigen Körper (22) bereitzustellen, wobei die an den Stützauslegern (5) vorgesehenen Eingriffsstrukturen (82) wenigstens einen Teil der Stützstruktur-Kopplungsmittel (6) bilden und derart ausgebildet sind, dass die lösbare, vertikal zugfeste Kopplung bereitgestellt werden kann, wenn sich die Stützausleger (5) in der Transportstellung befinden und die lösbare, vertikal zugfeste Kopplung nicht bereitgestellt werden kann, wenn sich wenigstens ein Stützausleger (5) in der Arbeitsstellung befindet.

## Claims

1. Transportable machining unit (10), in particular a circular table saw, for machining a workpiece with a tool (1), comprising a box-shaped support structure (2) which can be placed on a support and which has a workpiece support plate (4) which can be used to support the workpiece to be machined, and a drive unit (73) for mechanically driving the tool (1), which is arranged at least partially in the support structure (2) and is fastened thereto ready for operation, so that the drive unit (73) remains at least partially in the support structure during machining of the workpiece by the tool (1) driven by the drive unit (73), wherein the support structure (2) has support arms (5) which, in a state, in which the support structure (2) is placed on the support, define a footprint of the support structure (2), and which can be positioned selectively in a transport position or in a working position, wherein the footprint of the support structure (2) is larger in the working position in at least one horizontal direction than in the transport position, **characterised by** a safety means (72) configured to prevent the drive means (73) from being supplied with power when at least one of the support arms (5) is not in the working position.

2. Transportable machining unit (10) according to Claim 1, **characterised in that** the support structure (2) has a base body (71) and the supporting arms (5) are mounted on the base body (71) so as to be pivotable and/or displaceable in such a way that the supporting arms (5) remain essentially in the same vertical region in the transport position and in the working position.

3. Transportable machining unit (10) according to Claim 1, **characterised in that** the support structure (2) has a base body (71) and each of the supporting arms (5) is mounted on the base body (71) so as to be pivotable about a respective vertical axis of rotation.

4. Transportable machining unit (10) according to any one of Claims 1 to 3, **characterised in that** a horizontal cross-section of the support structure (2) has a substantially rectangular outer contour, wherein the supporting arms (5) are located within the rectangular outer contour in the transport position and the supporting arms (5) project at least partially horizontally beyond the outer contour in the working position.

5. Transportable machining unit (10) according to any one of Claims 1 to 4, **characterised in that** the supporting arms (5) are arranged in underside corner regions of the support structure (2).

6. Transportable machining unit (10) according to any one of Claims 1 to 5, **characterised in that** the support arms (5) each extend further in the horizontal direction than in the vertical direction, so that the support arms (5) each have a flat basic shape, wherein the support arms (5) each preferably have an essentially L-shaped base area.

7. Transportable machining unit (10) according to any one of Claims 1 to 6, **characterised in that** at least one of the support arms (5) has a vertically extending through-hole (74) suitable for inserting a screw with which the support structure (2) can be fixed on the support.

8. Transportable machining unit (10) according to any one of Claims 1 to 7, **characterised in that** at least one of the support arms (5) has a horizontally extending recess (75) suitable for inserting a clamping arm of a clamp with which the support structure (2) can be fixed on the support.

9. Transportable machining unit (10) according to any one of Claims 1 to 8, **characterised in that** the support arms (5) each have a vertically downwardly projecting cylindrical foot (76), wherein the cylindrical feet (76) are preferably spaced apart from one another in such a way that, in the working position and/or transport position of the support arms (5), they fit into a predetermined hole pattern of a worktop (77).

10. Transportable machining unit (10) according to Claim 9, **characterised in that** the cylindrical feet (76) can be selectively positioned in a fixing position or storage position, wherein the cylindrical feet (76) project downwards in the storage position not at all or less vertically than in the fixing position.

11. Transportable machining unit according to Claim 10, **characterised in that** the cylindrical feet (76) are constructed as bolts (78) which, in the fixing position, are removably inserted in insertion openings (79) provided on the underside of the support arms (5) and, in the storage position, are expediently accommodated in storage openings (81) preferably provided on the upper side of the support arms (5).

12. Arrangement (30) comprising a transportable machining unit (10) according to any one of Claims 9 to 11 and a worktop (77) provided with a hole pattern (96), wherein the transportable machining unit (10) is positioned on the worktop (77) such that the cylindrical feet (76) engage in respective holes of the hole pattern (96) and thereby fix the transportable machining unit (10) relative to the worktop (77) at least in a horizontal direction.

13. Stack assembly (20) comprising a transportable machining unit (10) according to any one of Claims 1 to 11 and a box-shaped body (22) arranged below the transportable machining unit (10) to form a vertical stack together with the transportable machining unit (10), wherein engagement structures (82) are provided on the support arms (5), which are designed such that in the transport position of the support arms (5) they are in engagement with corresponding engagement structures (67) of the box-shaped body and in the working position of the support arms (5) they are not in engagement with the corresponding engagement structures (67) of the box-shaped body.

14. Stack assembly (20) according to Claim 13, wherein the support structure (2) has support structure coupling means (6) adapted to provide a releasable vertical tension-proof coupling to the at least one box-shaped body (22), wherein the engagement structures (82) provided on the support arms (5) form at least a portion of the support structure coupling means (6) and being so formed, in that the detachable, vertically tension-proof coupling can be provided if the support arms (5) are in the transport position and the detachable, vertically tension-proof coupling cannot be provided if at least one support arm (5) is in the working position.

## Revendications

1. Unité de traitement (10) transportable, en particulier scie circulaire de table, pour usiner une pièce avec un outil (1), comprenant une structure de soutien (2) en forme de boîte pouvant être placée sur un support, laquelle dispose d'une plaque de réception de pièce (4) pouvant être utilisée pour réceptionner la pièce à usiner, ainsi qu'un système d'entraînement (73) pour l'entraînement mécanisé de l'outil (1), qui est disposé au moins en partie dans la structure de soutien (2) et est fixé sur celle-ci prêt à l'emploi de telle sorte que le système d'entraînement (73) reste au moins en partie dans la structure de soutien lors de l'usinage de la pièce par l'outil (1) entraîné par le système d'entraînement (73), dans laquelle la structure de soutien (2) dispose de pattes de soutien (5), qui définissent, dans un état dans lequel la structure de soutien (2) est déposée sur le support, une surface d'appui de la structure de soutien (2), et qui peuvent être positionnées au choix dans une position de transport ou dans une position de travail, dans laquelle la surface d'appui de la structure de soutien (2) est plus grande dans la position de travail dans au moins une direction horizontale que dans la position de transport,
**caractérisée par** un système de sécurité (72), qui est réalisé pour empêcher que le système d'entraînement (73) ne soit alimenté avec une puissance tant qu'au moins une des pattes de soutien (5) ne se trouve pas dans la position de travail.

2. Unité d'usinage (10) transportable selon la revendication 1, **caractérisée en ce que** la structure de soutien (2) dispose d'un corps de base (71) et les pattes de soutien (5) sont montées de telle manière de manière à pouvoir pivoter et/ou à pouvoir coulisser sur le corps de base (71) que les pattes de soutien (5) restent, dans la position de transport et dans la position de travail, sensiblement dans la même zone verticale.

3. Unité d'usinage (10) transportable selon la revendication 1 ou 2, **caractérisée en ce que** la structure de soutien (2) dispose d'un corps de base et chacune des pattes de soutien (5) est montée sur le corps de base (71) de manière à pouvoir pivoter autour d'un axe de rotation vertical respectif.

4. Unité d'usinage (10) transportable selon l'une quelconque des revendications 1 à 3, **caractérisée en ce qu'**une section transversale horizontale de la structure de soutien (2) présente un contour extérieur sensiblement rectangulaire, dans laquelle les pattes de soutien (5) se trouvent, dans la position de transport, à l'intérieur du contour extérieur rectangulaire et les pattes de soutien (5) dépassent, dans la position de travail, au moins en partie horizontalement du contour extérieur.

5. Unité d'usinage (10) transportable selon l'une quelconque des revendications 1 à 4, **caractérisée en ce que** les pattes de soutien (5) sont disposées dans des zones d'angle côté inférieur de la structure de soutien (2).

6. Unité d'usinage (10) transportable selon l'une quelconque des revendications 1 à 5, **caractérisée en ce que** les pattes de soutien (5) s'étendent davantage respectivement dans une direction horizontale que dans une direction verticale de telle sorte que les pattes de soutien (5) présentent respectivement une forme de base plate, dans laquelle les pattes de soutien (5) présentent de préférence respectivement une surface de base sensiblement en forme de L.

7. Unité d'usinage (10) transportable selon l'une quelconque des revendications 1 à 6, **caractérisée en ce qu'**au moins une des pattes de soutien (5) dispose d'un trou traversant (74) s'étendant verticalement, qui est adapté pour l'insertion d'une vis, avec laquelle la structure de soutien (2) peut être fixée sur le support.

8. Unité d'usinage (10) transportable selon l'une quelconque des revendications 1 à 7, **caractérisée en ce qu'**au moins une des pattes de soutien (5) dispose d'un logement (75) s'étendant horizontalement, qui est adapté pour l'insertion d'un bras de serrage d'une attache par serrage, avec laquelle la structure de soutien (2) peut être fixée sur le support.

9. Unité d'usinage (10) transportable selon l'une quelconque des revendications 1 à 8, **caractérisée en ce que** les pattes de soutien (5) disposent respectivement d'un pied (76) cylindrique dépassant verticalement vers le bas, dans laquelle les pieds (76) cylindriques sont tenus à distance de préférence de telle manière les uns des autres qu'ils passent, dans la position de travail et/ou dans la position de transport des pattes de soutien (5), dans une trame perforée prédéfinie d'une plaque de travail (77).

10. Unité d'usinage (10) transportable selon la revendication 9, **caractérisée en ce que** les pieds (76) cylindriques peuvent être positionnés au choix dans une position de fixation ou une position de rangement, dans laquelle les pieds (76) cylindriques ne dépassent pas ou moins loin verticalement vers le bas dans la position de rangement que dans la position de fixation.

11. Unité d'usinage transportable selon la revendication 10, **caractérisée en ce que** les pieds (76) cylindriques sont réalisés en tant que boulons (78), qui sont insérés, dans la position de fixation, de manière à pouvoir être retirés, dans des ouvertures d'insertion (79) prévues côté inférieur sur les pattes de soutien (5) et sont abrités de manière opportune, dans la position de rangement, dans des ouvertures de rangement (81) prévues de préférence côté supérieur sur les pattes de soutien (5).

12. Structure (30) comprenant une unité d'usinage (10) transportable selon l'une quelconque des revendications 9 à 11 ainsi qu'une plaque de travail (77) pourvue d'une trame perforée (96), dans laquelle l'unité d'usinage (10) transportable est positionnée de telle manière sur la plaque de travail (77) que les pieds (76) cylindriques s'engagent dans des trous respectifs de la trame perforée (96) et fixent ainsi l'unité d'usinage (10) transportable par rapport à la plaque de travail (77) au moins dans une direction horizontale.

13. Ensemble empilé (20) comprenant une unité d'usinage (10) transportable selon l'une quelconque des revendications 1 à 11 ainsi qu'un corps (22) en forme de boîte, qui est disposé sous l'unité d'usinage (10) transportable pour former conjointement avec l'unité d'usinage (10) transportable une pile (20) verticale, dans lequel sont prévues sur les pattes de soutien (5) des structures de prise (82), qui sont réalisées de telle manière qu'elles sont en prise, dans la position de transport des pattes de soutien (5), avec des structures de prise (67) correspondantes du corps en forme de boîte et ne sont pas en prise, dans la position de travail des pattes de soutien (5), avec les structures de prise (67) correspondantes du corps en forme de boîte.

14. Ensemble empilé (20) selon la revendication 13, dans lequel la structure de soutien (2) dispose de moyens de couplage de structure de soutien (6) qui sont adaptés pour fournir un couplage amovible résistant à la traction verticalement avec l'au moins un corps (22) en forme de boîte, dans lequel les structures de prise (82) prévues sur les pattes de soutien (5) forment au moins une partie des moyens de couplage de structure de soutien (6) et sont réalisées de telle manière que le couplage amovible, résistant à la traction verticalement peut être fourni quand les pattes de soutien (5) se trouvent dans la position de transport et le couplage amovible résistant à la traction verticalement ne peut pas être fourni quand au moins une patte de soutien (5) se trouve dans la position de travail.
